# FASCICULE DE BREVET EUROPEEN

(11) **EP 1 856 484 B1**
(45) Date de publication et mention de la délivrance du brevet: **07.10.2020**
(21) Numéro de dépôt: 06725987.9
(22) Date de dépôt: 24.02.2006
(51) Int. Cl.: G01D 5/22, G01P 3/488, G01D 5/20

(54) **CAPTEUR INDUCTIF DE POSITION ANGULAIRE**
INDUKTIVE WINKELMESSEINRICHTUNG
ANGULAR POSITION INDUCTIVE SENSOR

(30) Priorité: 07.03.2005 FR 0502241
(43) Date de publication de la demande: 21.11.2007
(73) Titulaire: DIEHL METERING SAS, 68300 Saint-Louis (FR)
(72) Inventeur: BACH, Guy, F-68640 Waldighoffen (FR); DOCKWILLER, Bernard, F-68720 Saint Bernard (FR)
(74) Mandataire: Nuss, Laurent
(86) Numéro de dépôt international: PCT/FR2006/000425
(87) Numéro de publication internationale: WO 2006/095072

(56) Documents cités:
- EP-A- 1 122 520
- DE-A1- 4 335 701
- US-A- 6 011 389

## Description

La présente invention a pour objet un capteur inductif de position angulaire.

Il est courant d'utiliser une pièce mécanique qui tourne en fonction de l'écoulement d'un fluide afin de mesurer un débit. Généralement, un capteur de position angulaire détecte la vitesse de rotation de la pièce tournante afin de permettre un traitement électronique de l'information. La présente invention est particulièrement adaptée à cette application, bien qu'elle n'y soit pas limitée.

Plusieurs solutions sont connues pour détecter une position angulaire.

Une première solution utilise des capteurs magnétiques. La pièce tournante est alors équipée d'un petit aimant permanent dont le champ magnétique actionne le contact électrique d'une ampoule Reed placée à proximité. Les commutations de ce contact électrique sont donc représentatives de l'écoulement du fluide. Certains capteurs font appel à plusieurs ampoules afin de permettre, par exemple, de détecter le sens de rotation de la pièce tournante, donc le sens d'écoulement du fluide. Ces capteurs de position angulaire présentent l'inconvénient d'être fragiles, car l'ampoule Reed est en verre. De plus, ils sont sensibles aux fraudes car un champ magnétique extérieur suffisamment puissant permet de modifier le comportement des ampoules Reed.

Une deuxième solution utilise des capteurs capacitifs. La pièce tournante est alors équipée d'un disque partiellement métallisé. A proximité et parallèlement à ce disque se trouve un arrangement particulier de zones métallisées dont les différents couplages capacitifs varient en fonction de la position du disque. L'observation de ces couplages capacitifs permet de détecter la rotation de la pièce tournante, donc l'écoulement du fluide. Selon l'arrangement de ces zones métallisées il est également possible de détecter le sens de rotation de la pièce tournante, donc le sens d'écoulement du fluide. Les capteurs capacitifs présentent l'inconvénient de devoir être très proches du disque tournant. De plus ils sont facilement perturbés par tout changement géométrique ou toute variation de ce qui se trouve entre le disque tournant et le capteur.

Une troisième solution utilise des capteurs inductifs. La pièce tournante est équipée d'un disque partiellement métallisé. A proximité de ce disque se trouve un circuit oscillant du type LC (bobine condensateur) dont l'amortissement dépend de la distance entre la bobine L et la zone métallisée parcourue par les courants de Foucault engendrés lors de l'oscillation. L'observation de cet amortissement permet de détecter la rotation de la pièce tournante, donc l'écoulement du fluide. L'emploi de plusieurs bobines peut permettre, par exemple, de détecter également le sens de rotation de la pièce tournante, donc le sens d'écoulement du fluide. Les capteurs inductifs présentent les inconvénients d'avoir un prix et une consommation électrique relativement élevés.

Par le document DE-A-43 35 701, on connait un capteur inductif de position angulaire selon le préambule de la revendication 1, à savoir un capteur inductif de position angulaire, comportant :
- un disque partiellement métallisé mobile en rotation autour de son axe de révolution ;
- un stator comportant une bobine primaire, d'axe sensiblement confondu avec ledit axe de révolution, et plusieurs bobines secondaires identiques et disposées de manière à permettre un couplage inductif entre ladite bobine primaire et lesdites bobines secondaires, et
- un moyen d'alimentation alimentant la bobine primaire,
l'axe de chaque bobine secondaire étant sensiblement parallèle audit axe de révolution, les bobines secondaires formant une ou plusieurs paire(s) de bobines secondaires, et lesdites bobines secondaires de la ou chaque paire étant reliées, d'une part, entre elles, en série et en opposition de phase l'une par rapport à l'autre, et, d'autre part, aux bornes d'un moyen de mesure apte à générer un signal de sortie dépendant de la tension aux bornes de ladite paire.

Cette construction de capteur connue présente une structure complexe, encombrante et coûteuse à réaliser, les deux bobines secondaires étant montées sur un support spécifique, distinct de celui de la bobine primaire, et s'étendant chacune sur tout le pourtour dudit support spécifique.

De plus, la bobine primaire est alimentée en permanence par une tension alternative, rendant ledit capteur peu économique à l'usage, d'avantage susceptible aux circonstances d'installation et fragile aux tentatives de fraudes.

Par le document EP-A-1 122 520, on connait par ailleurs un capteur de position comportant une bobine primaire et deux bobines secondaires.

La bobine primaire est, dans ce second capteur connu, alimentée par une source de courant alternatif, les deux bobines secondaires ne présentent pas une construction symétrique et elles sont connectées à un moyen de mesure de manière séparée.

Une telle construction est sensible aux conditions d'installation, ainsi qu'aux champs magnétiques perturbateurs et aux tentatives de fraude. De plus, à l'usage, une telle construction de capteur alimentée en permanence est peu économique.

La présente invention a pour but de proposer un capteur inductif de position angulaire qui évite au moins certains des inconvénients précités, qui soit peu sensible aux conditions d'installation, résistant aux tentatives de fraude et économique, lors de sa construction et à l'usage.

Ce but est atteint, pour un capteur selon le préambule de la revendication 1, grâce aux caractéristiques de la partie caractérisante de ladite revendication 1.

De préférence, le capteur comporte deux paires de bobines secondaires, lesdites bobines secondaires étant réparties uniformément autour dudit axe de révolution.

Selon une caractéristique de l'invention, ledit moyen d'alimentation est un générateur d'impulsions.

Selon un mode de réalisation de l'invention, ledit moyen de mesure comporte un comparateur associé à chaque paire.

Selon un autre mode de réalisation de l'invention, ledit moyen de mesure comporte un moyen de mesure quantitatif associé à chaque paire, ledit moyen de mesure quantitatif étant combiné avec un moyen de traitement.

Selon un mode de réalisation de l'invention, ladite bobine primaire entoure lesdites bobines secondaires.

De préférence, ledit disque partiellement métallisé est métallisé sur une surface correspondant à un demi disque.

Selon une caractéristique de l'invention, ladite bobine primaire et lesdites bobines secondaires sont réalisées sur un circuit imprimé.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique en perspective montrant un capteur inductif de position angulaire selon un mode de réalisation de l'invention ;
- la figure 2 est une vue schématique du circuit imprimé du capteur de la figure 1 ;
- la figure 3 est un schéma électrique du circuit imprimé de la figure 2 ; et
- la figure 4 est une vue schématique en perspective du capteur de la figure 1 montrant le disque tournant, la bobine primaire et les bobines secondaires.

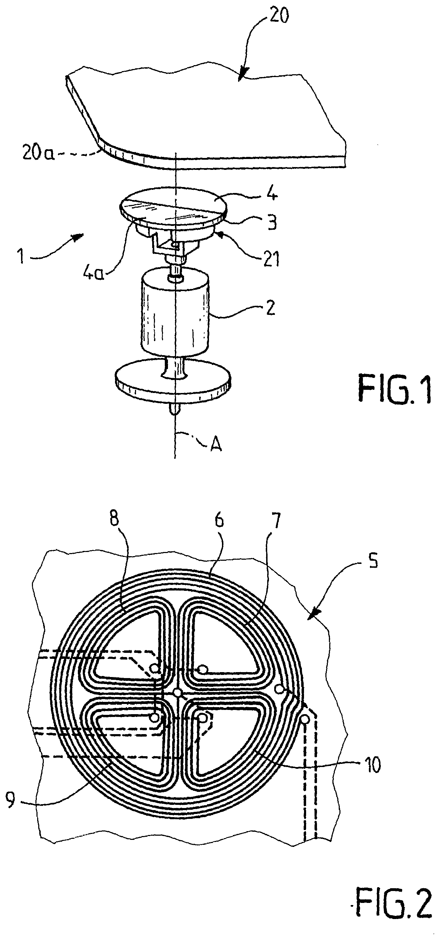

En se référant à la figure 1, on voit un mobile tournant 2 qui est entraîné en rotation selon son axe de révolution A, par exemple par l'écoulement d'un fluide (non représenté). Un capteur inductif de position angulaire 1 comporte un stator 20 et un rotor 21. Le stator 20 et le rotor 21 sont déplaçables angulairement l'un par rapport à l'autre selon l'axe A. On notera que l'utilisation du terme stator n'implique pas que le stator 20 ait une orientation fixe.

Le rotor 21 comporte un disque tournant 3. Le disque tournant 3 est disposé sur le mobile tournant 2, de manière que le disque tournant 3 soit solidaire en rotation selon l'axe A du mobile tournant 2. La surface plane 4 du disque 3 opposée au mobile tournant 2 est partiellement métallisée. Par exemple un demi disque 4a est métallisé.

Le stator 20 comporte un circuit imprimé 5 (figure 2). Le circuit imprimé 5 est disposé au droit et à proximité du disque 3, de manière sensiblement parallèle à la surface 4.

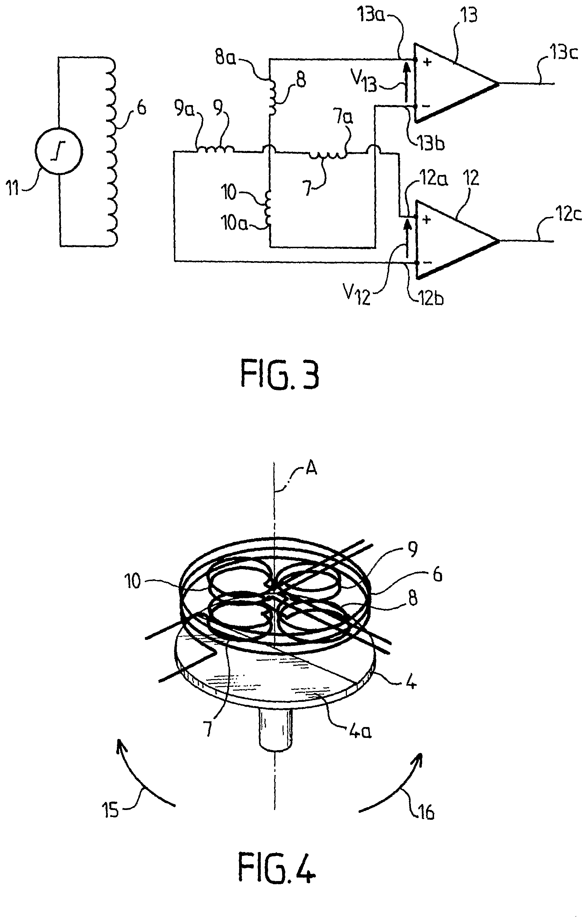

En se référant aux figures 2 et 3, on va maintenant décrire le circuit imprimé 5. Le circuit imprimé 5 est disposé sur la face 20a du stator 20 faisant face à la surface 4. Le circuit imprimé 5 comporte une bobine primaire 6. Par exemple la bobine primaire comporte cinq spires. Quatre bobines secondaires 7, 8, 9 et 10 sont disposées à l'intérieur de la bobine primaire 6. Les bobines secondaires 7, 8, 9 et 10 sont identiques et comportent par exemple quatre spires chacune. Dans une variante représentée sur la figure 4, la bobine primaire 6 comporte trois spires et chaque bobine secondaire comporte deux spires. Le circuit imprimé 5 est disposé par rapport au disque 3 de manière que l'axe de la bobine principale 6 soit confondu avec l'axe A, l'axe de chaque bobine secondaire 7, 8, 9 et 10 étant à ce moment sensiblement parallèle à l'axe A. Les bobines secondaires 7, 8, 9 et 10 sont uniformément réparties autour de l'axe A.

La bobine primaire 6 est alimentée par un générateur d'impulsions 11. L'information utile en sortie des quatre bobines 7, 8, 9 et 10 étant immédiatement présente, tel que cela sera décrit en détail plus loin, la durée de chaque impulsion peu être relativement courte. Par exemple, la durée d'une impulsion est de l'ordre de quelques nanosecondes, ce qui permet notamment de minimiser la consommation de courant dans la bobine primaire 6. On notera qu'un tel capteur 1 est particulièrement résistant aux tentatives de fraudes car la mesure ne dure que quelques nanosecondes.

Les bobines secondaires 7, 8, 9 et 10 sont couplées par paires 7 et 9 (respectivement 8 et 10), les bobines de chaque paire étant montées en série et en opposition de phase. L'extrémité 7a de la bobine 7 qui n'est pas reliée à la bobine 9 est reliée à une entrée positive 12a d'un comparateur 12. L'extrémité 9a de la bobine 9 qui n'est pas reliée à la bobine 7 est reliée à une entrée négative 12b du comparateur 12. L'extrémité 8a de la bobine 8 qui n'est pas reliée à la bobine 10 est reliée à une entrée positive 13a d'un comparateur 13. L'extrémité 10a de la bobine 10 qui n'est pas reliée à la bobine 8 est reliée à une entrée négative 13b du comparateur 13. Les comparateurs 12 et 13 sont des comparateurs de tension. La valeur de la sortie 12c (respectivement 13c) du comparateur 12 (respectivement 13) est fonction de la tension V₁₂ (respectivement V₁₃) entre ses entrées 12a et 12b (respectivement 13a et 13b). On notera que le fait de connecter les bobines secondaires 7, 8, 9 et 10 en mode différentiel garantit une excellente réjection des champs magnétiques perturbateurs extérieurs qui peuvent exister, ce qui contribue à réduire le risque de fraude.

On va maintenant décrire le fonctionnement du capteur 1.

Lorsqu'on applique une impulsion à la bobine primaire 6, celle-ci crée un champ magnétique d'excitation qui traverse les quatre bobines 7, 8, 9 et 10. On notera que les bobines 7, 8, 9 et 10 étant disposées de manière similaire par rapport à la bobine 6, l'amplitude du champ magnétique d'excitation traversant chaque bobine 7, 8, 9 et 10 est identique. Le champ magnétique d'excitation atteint aussi le demi disque métallisé 4a. Cela a pour effet de générer des courants de Foucault sur le demi disque 4a. Ces courants de Foucault génèrent un champ magnétique opposé qui s'oppose au champ magnétique d'excitation.

On considère dans un premier temps que lorsque l'impulsion est générée le demi disque métallisé 4a se trouve juste sous la bobine 7 (figure 4). A ce moment, chaque bobine 7, 8, 9 et 10 est traversée par un champ magnétique résultant de la somme du champ magnétique d'excitation et du champ magnétique opposé qui la traversent. La bobine 7 étant au droit du demi disque 4a, le champ magnétique opposé qui la traverse a une amplitude faible mais non négligeable. Le champ magnétique résultant traversant la bobine 7 est donc légèrement inférieur au champ magnétique d'excitation. La bobine 9 étant la bobine secondaire la plus éloignée du demi disque 4a, l'amplitude du champ magnétique opposé qui la traverse est beaucoup plus faible, par exemple sensiblement égale à zéro, que l'amplitude du champ magnétique d'excitation traversant la bobine 9. Le champ magnétique résultant qui traverse la bobine 9 est donc sensiblement égal au champ magnétique d'excitation. Les bobines 8 et 10 étant disposées de manière symétrique par rapport au demi disque 4a, elles sont traversées par un champ magnétique résultant de même amplitude. Les champs magnétiques résultants qui traversent les bobines 7, 8, 9 et 10 génèrent des tensions induites dans les bobines 7, 8, 9 et 10, chaque tension induite étant fonction du champ magnétique résultant associé. Les tensions induites dans les bobines 7 et 9 (respectivement 8 et 10) déterminent l'amplitude et le signe des tensions V₁₂ et V₁₃. Les sorties 12c et 13c peuvent prendre plusieurs valeurs en fonction de l'amplitude et du signe des tensions V₁₂ et V₁₃.

Les tensions induites dans les bobines 8 et 10 étant égales et les bobines 8 et 10 étant montées en opposition de phase, la tension V₁₃ est sensiblement nulle. La tension induite dans la bobine 7 étant inférieure à la tension induite dans la bobine 9, la tension V₁₂ est donc négative. La sortie 13c est donc nulle et la sortie 12c négative. On notera qu'il s'agit d'un exemple de montage et que le capteur 1 fonctionnerait de manière similaire avec des bobines 7, 8, 9 et 10 inversées.

Lorsque le demi disque 4a tourne d'un huitième de tour, de manière qu'il se trouve sous les bobines 7 et 10 lorsqu'une impulsion est générée, le champ magnétique opposé généré par le demi disque 4a en réponse à une impulsion de la bobine 6 traverse de manière identique les bobines 7 et 10. On notera que, comme cela a été décrit précédemment, le champ magnétique d'excitation traverse de manière identique les quatre bobines 7, 8, 9 et 10. Les champs magnétiques résultants traversant les bobines 7 et 10 sont donc identiques. De la même manière, les champs magnétiques résultants traversants les bobines 8 et 9 sont identiques. Les tensions induites ont donc la même valeur dans les bobines 7 et 10 d'une part et dans les bobines 8 et 9 d'autre part. Les tensions V₁₂ et V₁₃ ont donc la même amplitude. Dans l'exemple de montage de la figure 3, les tensions V₁₂ et V₁₃ sont de signe inverse, V₁₂ étant négative et V₁₃ positive, du fait de l'effet différentiel.

Lorsque le demi disque 4a tourne encore d'un huitième de tour, il se trouve juste sous la bobine 10. A ce moment on obtient, de manière similaire au cas où le demi disque 4a se trouve sous la bobine 7, une tension V₁₂ sensiblement nulle et une tension V₁₃ positive. La sortie 12c est donc nulle et la sortie 13c positive.

Lorsque le demi disque 4a tourne encore d'un huitième de tour, de manière qu'il se trouve sous les bobines 10 et 9, la tension V₁₂ et la tension V₁₃ ont la même amplitude et le même signe. A chaque impulsion le capteur 1 mesure de la même manière les tensions V₁₂ et V₁₃.

Lorsque le disque 3 tourne, la fréquence des signaux des sorties 12c et 13c permet de déterminer la vitesse de rotation du disque 3, donc l'écoulement du fluide. De plus, les courbes de la sortie 13c en fonction du temps et de la sortie 12c en fonction du temps sont en quadrature. Cela permet de déterminer le sens de la rotation du mobile 2, en déterminant quelle courbe est en avance sur l'autre, c'est-à-dire en comparant l'amplitude et le signe des sorties 12c et 13c. Dans l'exemple de la figure 3, lorsque le mobile 2 tourne dans le sens horaire, représenté par la flèche 15, la courbe de sortie 13c est en avance sur la courbe de sortie 12c, et lorsque le mobile 2 tourne dans le sens trigonométrique, représenté par la flèche 16, la courbe de sortie 12c est en avance sur la courbe de sortie 13c.

D'autres variantes sont possibles. Par exemple, le nombre de spires des bobines peut être quelconque.

Une seule paire de bobines secondaires peut être prévue, dans ce cas le capteur ne permet pas de détecter le sens de rotation du mobile.

Le générateur alimentant la bobine primaire peut générer un signal de forme quelconque, par exemple un signal alternatif.

On notera que le positionnement relatif des différents éléments du capteur les uns par rapport aux autres n'est pas essentiel, toute différence de positionnement entraînant un offset constant dans le signal détecté, un tel offset étant très facile à corriger.

Les comparateurs comportent généralement un offset de l'ordre de la dizaine de millivolt. Lorsque le signal est faible, par exemple de l'ordre de 2-3 mV, ce qui peut être une conséquence de l'éloignement du disque par rapport aux bobines, un moyen de mesure de la tension aux bornes des paires de bobines est utilisé à la place du comparateur, de manière à obtenir une valeur quantitative de la tension, cette valeur étant ensuite traitée par un moyen de traitement, par exemple logiciel ou électronique, de manière à dissocier le signal de l'offset.

Bien que l'invention ait été décrite en relation avec plusieurs modes de réalisations particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Capteur inductif de position angulaire, comportant :
- un disque (3) partiellement métallisé mobile en rotation autour de son axe de révolution (A) ;
- un stator comportant une bobine primaire (6), d'axe sensiblement confondu avec ledit axe de révolution (A), et plusieurs bobines secondaires (7, 8, 9, 10) identiques et disposées de manière à permettre un couplage inductif entre ladite bobine primaire et lesdites bobines secondaires, et
- un moyen d'alimentation (11) alimentant la bobine primaire (6),
l'axe de chaque bobine secondaire est-étant sensiblement parallèle audit axe de révolution (A),
**caractérisé en ce que** les bobines secondaires (7, 8, 9, 10) forment une ou plusieurs paire(s) de bobines secondaires, et lesdites bobines secondaires de la ou chaque paire étant reliées, d'une part, entre elles, en série et en opposition de phase l'une par rapport à l'autre, et, d'autre part, aux bornes d'un moyen de mesure (12, 13) apte à générer un signal de sortie dépendant de la tension aux bornes de ladite paire,
les deux bobines secondaires de la ou chaque paire (7, 9 ; 8, 10) sont disposées sensiblement symétriquement par rapport audit axe de révolution (A), **en ce que** ladite bobine primaire (6) et lesdites bobines secondaires (7, 8, 9, 10) sont réalisées sur un circuit imprimé (5) et **en ce que** ledit moyen d'alimentation (11) est un générateur d'impulsions.

2. Capteur selon la revendication 1, **caractérisé en ce qu'**il comporte deux paires de bobines secondaires (7, 8, 9, 10), lesdites bobines secondaires étant réparties uniformément autour dudit axe de révolution (A).

3. Capteur selon la revendication 1, **caractérisé en ce que** ledit moyen de mesure comporte un comparateur (12, 13) associé à chaque paire.

4. Capteur selon la revendication 1, **caractérisé en ce que** ledit moyen de mesure comporte un moyen de mesure quantitatif associé à chaque paire, ledit moyen de mesure quantitatif étant combiné avec un moyen de traitement.

5. Capteur selon la revendication 1, **caractérisé en ce que** ladite bobine primaire entoure lesdites bobines secondaires.

6. Capteur selon la revendication 1, **caractérisé en ce que** ledit disque partiellement métallisé est métallisé sur une surface correspondant à un demi disque (4a).

## Patentansprüche

1. Induktiver Winkelpositionssensor, welcher umfasst:
- eine teilweise metallisierte Scheibe (3), die drehbeweglich um ihre Drehachse (A) ist;
- einen Stator, der eine Primärspule (6), deren Achse im Wesentlichen mit der Drehachse (A) zusammenfällt, und mehrere Sekundärspulen (7, 8, 9, 10), die identisch und so angeordnet sind, dass sie eine induktive Kopplung zwischen der Primärspule und den Sekundärspulen ermöglichen, umfasst, und
- ein Stromversorgungsmittel (11), das die Primärspule (6) speist,
wobei die Achse jeder Sekundärspule im Wesentlichen parallel zur Drehachse (A) ist, **dadurch gekennzeichnet, dass** die Sekundärspulen (7, 8, 9, 10) ein oder mehrere Paar(e) von Sekundärspulen bilden und die Sekundärspulen des oder jedes Paares einerseits miteinander in Reihe und in Gegenphase zueinander und andererseits mit den Anschlüssen eines Messmittels (12, 13), das geeignet ist, ein von der Spannung an den Anschlüssen des Paares abhängiges Ausgangssignal zu erzeugen, verbunden sind, wobei die zwei Sekundärspulen des oder jedes Paares (7, 9; 8, 10) im Wesentlichen symmetrisch in Bezug auf die Drehachse (A) angeordnet sind, dadurch, dass die Primärspule (6) und die Sekundärspulen (7, 8, 9, 10) auf einer Leiterplatte (5) hergestellt sind, und dadurch, dass das Stromversorgungsmittel (11) ein Impulsgenerator ist.

2. Sensor nach Anspruch 1, **dadurch gekennzeichnet, dass** er zwei Paare von Sekundärspulen (7, 8, 9, 10) umfasst, wobei die Sekundärspulen gleichmäßig um die Drehachse (A) herum verteilt sind.

3. Sensor nach Anspruch 1, **dadurch gekennzeichnet, dass** das Messmittel für jedes Paar einen zugeordneten Komparator (12, 13) umfasst.

4. Sensor nach Anspruch 1, **dadurch gekennzeichnet, dass** das Messmittel für jedes Paar ein zugeordnetes quantitatives Messmittel umfasst, wobei das quantitative Messmittel mit einem Verarbeitungsmittel kombiniert ist.

5. Sensor nach Anspruch 1, **dadurch gekennzeichnet, dass** die Primärspule die Sekundärspulen umgibt.

6. Sensor nach Anspruch 1, **dadurch gekennzeichnet, dass** die teilweise metallisierte Scheibe auf einer Fläche metallisiert ist, die einer halben Scheibe (4a) entspricht.

## Claims

1. Inductive angular-position sensor, comprising:
- a partially metallized disc (3) that moves in rotation around its axis of revolution (A);
- a stator that comprises a primary coil (6), with an axis that is substantially coincident with said axis of revolution (A), and a plurality of secondary coils (7, 8, 9, 10) that are identical and arranged so as to allow an inductive coupling between said primary coil and said secondary coils, and
- a power supply means (11) supplying the primary coil (6) with power,
the axis of each secondary coil being substantially parallel to said axis of revolution (A), **characterized in that** the secondary coils (7, 8, 9, 10) form one or more pairs of secondary coils, and said secondary coils of the or each pair are connected, on the one hand, to one another, in series and in phase opposition relative to one another, and, on the other hand, to the terminals of a measurement means (12, 13) that can generate an output signal that is dependent on the voltage at the terminals of said pair, the two secondary coils of the or each pair (7, 9; 8, 10) are arranged substantially symmetrically relative to said axis of revolution (A), **in that** said primary coil (6) and said secondary coils (7, 8, 9, 10) are produced on a printed circuit board (5) and **in that** said power supply means (11) is a pulse generator.

2. Sensor according to Claim 1, **characterized in that** it comprises two pairs of secondary coils (7, 8, 9, 10), said secondary coils being distributed uniformly around said axis of revolution (A).

3. Sensor according to Claim 1, **characterized in that** said measurement means comprises a comparator (12, 13) that is associated with each pair.

4. Sensor according to Claim 1, **characterized in that** said measurement means comprises a quantitative measurement means that is associated with each pair, said quantitative measurement means being combined with a processing means.

5. Sensor according to Claim 1, **characterized in that** said primary coil surrounds said secondary coils.

6. Sensor according to Claim 1, **characterized in that** said partially metallized disc is metallized on a surface that corresponds to a half-disc (4a).
